# EUROPÄISCHE PATENTANMELDUNG

(11) **EP 0 963 089 A2**
(43) Veröffentlichungstag der Anmeldung: **08.12.1999**
(21) Anmeldenummer: 99109144.8
(22) Anmeldetag: 08.05.1999
(51) Int. Cl.: H04M 1/02, A47G 29/087, A47J 45/02

(54) **Gegen Verschieben gesichertes elektrisches Tischgerät**

(30) Priorität: 05.06.1998 DE 19825145
(71) Anmelder: Deutsche Telekom AG, 53113 Bonn (DE)
(72) Erfinder: Hertzel, Silvio Dipl.-Ing., 53639 Königswinter (DE); Wagner, Robert Dipl.-Ing., 53343 Wachtberg (DE); Perini, Roland Dipl.-Ing., 53424 Remagen (DE)

(57) **Zusammenfassung**

Die Erfindung betrifft ein elektrisches, manuell betätigbares Tischgeräte, wie z. B. Tastaturen und Telefone, die rutschfeste Füße, beispielsweise Saugnapffüße aufweisen. Um die Saugnapfwirkung derartiger Füße weiter zu verbessern, sind die Füße saugnapfförmig ausgebildet, wobei wenigstens eine Pumpe dem Tischgerät zugeordnet ist. Die Pumpe ist mit den saugnapfförmigen Füßen verbunden, wobei eine Schalteinrichtung zum Einschalten oder Ausschalten der Pumpe vorgesehen ist.

## Beschreibung

Die Erfindung beruht auf einem elektrischen, manuell betätigbaren Tischgerät, insbesondere einem drahtgebundenen Telefon, mit wenigstens einer Einrichtung zur Sicherung des elektrischen Tischgeräts gegen Verschieben gemäß Anspruch 1.

Es sind elektrische, manuell betätigbare Tischgeräte, wie z. B. Telefone, Diktiergeräte, Tastaturen, Mixer für den Küchenbetrieb und dergleichen, bekannt, die haftfähige, zumeist gummiartige Füße aufweisen, die beispielsweise auf einer glatten Tischplatte ein Verschieben oder Rutschen des Gerätes verhindern sollen. Obwohl Tischgeräte mit derartigen rutschfesten Füßen in befriedigender Weise gegen ein Verschieben gesichert sind, besteht nach wie vor ein Bedürfnis, die Rutschfestigkeit zu verbessern.

Der Erfindung liegt daher die Aufgabe zugrunde, ein elektrisches, manuell betätigbares Tischgerät mit wenigstens einer Einrichtung zur Sicherung gegen Verschieben derart weiterzubilden, daß ein Verschieben und/oder Verrutschen des Tischgeräts auch bei größeren seitlichen Krafteinwirkungen vermieden werden kann.

Dieses technische Problem löst die Erfindung mit den Merkmalen des Anspruchs 1.

Dazu ist die Einrichtung zur Sicherung des Tischgeräts gegen Verschieben saugnapfförmig ausgebildet, wobei wenigstens eine dem Tischgerät zugeordnete Pumpe mit der saugnapfförmigen Einrichtung verbunden ist. Darüber hinaus ist eine Schalteinrichtung zum Ein- und Ausschalten der Pumpe vorgesehen.

Es sind zwar Füße für Tischgeräte mit einer Saugwirkung bekannt, doch verliert die Saugwirkung infolge einer Abnahme des Unterdrucks in dem vom Fuß eingeschlossenen Raum im Lauf der Zeit ab. Dank des Einsatzes einer Pumpe kann jedoch der Unterdruck in der saugnapfförmigen Einrichtung beliebig lange aufrecht erhalten werden. Ein weiterer Vorteil ist darin zu sehen, daß das Tischgerät im nicht aktivierten Zustand leicht verschoben werden kann.

Vorteilhafte Weiterbildungen sind Gegenstand der Unteransprüche.

Zweckmäßigerweise besteht die saugnapfförmige Einrichtung aus einem Material, das beim Aufsetzen auf eine ebene Platte einen ausreichend hohen Grad an Abdichtung des von der saugnapfförmigen Einrichtung umschlossenen Raums gegenüber der Umgebung gewährleistet. Solche Materialien sind hinlänglich bekannt.

Um den Energieverbrauch beim Betreiben der Pumpe möglichst gering halten zu können, ist die Schalteinrichtung derart ausgebildet, daß sie die Pumpe beim Aktivieren des Tischgeräts einschaltet und beim Deaktivieren automatisch wieder ausschaltet. Hierzu kann dem Tischgerät ein Mikroprozessor zugeordnet sein, der den aktiven und deaktivierten Zustand des Tischgeräts erkennt und daraufhin die Schalteinrichtung steuert.

Zweckmäßigerweise weist die saugnapfförmige Einrichtung an der zum elektrischen Tischgerät weisenden Seite eine Bohrung zur Aufnahme des einen Endes einer Saugleitung auf, die mit ihrem anderen Ende auf einem Saugstutzen der Pumpe aufsitzt.

Obwohl es denkbar ist, die saugnapfförmige Einrichtung separat zu Füßen an dem Tischgerät anzuordnen, ist es vorteilhaft, die Füße selbst als saugnapfförmige Einrichtung auszubilden.

Gemäß einem besonderen Ausführungsbeispiel handelt es sich bei dem elektrischen Tischgerät um ein Telefon mit einem über eine Anschlußschnur befestigten Telefonhörer und bei der Schalteinrichtung um ein Relais. Das Relais ist derart ausgebildet, daß es beim Abheben des Telefonhörers die Pumpe einschaltet und beim Auflegen des Telefonhörers die Pumpe wieder ausschaltet.

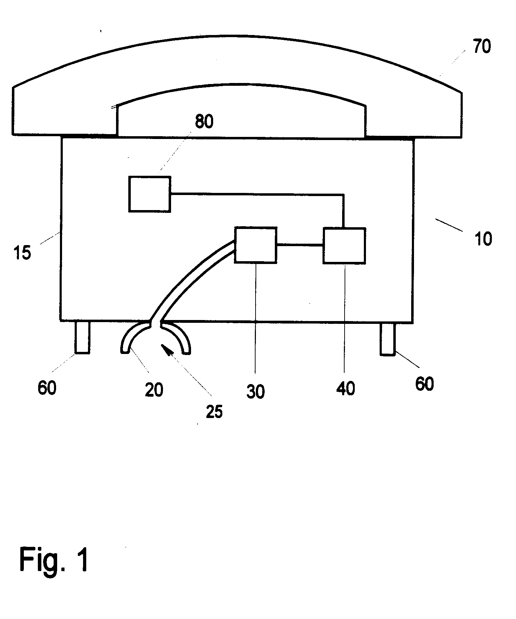

Die Erfindung wird nachstehend anhand eines Ausführungsbeispiels in Verbindung mit der beiliegenden Zeichnung näher erläutert.

Obwohl, wie bereits einleitend erwähnt, es sich bei dem elektrischen, manuell betätigbaren Tischgerät um Tastaturen, Diktiergeräte und dergleichen handeln kann, wird die Erfindung nachstehend beispielhafterweise an einem ISDN-Telefon erläutert. Das ISDN-Telefon 10 umfaßt ein Gehäuse 15 sowie einen über eine Anschlußschnur (nicht dargestellt) mit dem Telefongehäuse 15 verbundenen Telefonhörer 70. In dem Gehäuse 15 ist beispielsweise ein Mikroprozessor 80 angeordnet, der mit einer Schalteinrichtung 40, beispielsweise einem Schalttransistor, elektrisch verbunden ist. Die Schalteinrichtung 40 ist elektrisch mit einer Saugpumpe 30 verbunden. An der Unterseite des Gehäuses 15 sind mehrere Füße 60 zum Abstützen auf einer ebenen Platte befestigt. Darüber hinaus ist eine saugnapfförmige Einrichtung 20 ebenfalls an der Unterseite des Gehäuses 15 befestigt, die im vorliegenden Beispiel als weiterer Stützfuß dient. Die saugnapfförmige Einrichtung 20 ist derart bemessen, daß sie beim Aufsetzen des Telefons 10 auf einer Platte mit dieser in Berührung kommt. Die saugnapfförmige Einrichtung 20 besteht aus einem Material, das dafür sorgt, daß im aufgesetzten Zustand der von der saugnapfförmigen Einrichtung 20 eingeschlossene Raum 25 ausreichend dicht gegen die Umgebung abgedichtet ist. Wie in der Figur dargestellt, weist die saugnapfförmige Einrichtung 20 eine im wesentlichen halbkugelförmige Ausgestaltung auf. Obwohl in diesem Beispiel die saugnapfförmige Einrichtung 20 separat zu den Füßen 60 dargestellt ist, können die Füße selbst als saugnapfförmige Einrichtung ausgebildet sein. Die saugnapfförnige Einrichtung 20 weist an der zur Unterseite des Telefongehäuses 15 weisenden Seite eine Bohrung auf, in die ein Ende einer Saugleitung 50 eingeführt ist. Das andere Ende der Saugleitung 50 ist über einen Stutzen mit der Pumpe verbunden.

Nachfolgend wird kurz die Funktionsweise des gegen Verschieben gesicherten Telefons 10 näher erläutert.

Der Mikroprozessor 80 des ISDN-Telefons 10 ist derart ausgebildet, daß er das Aktivieren des Telefons, d. h. das Abheben des Telefonhörers 70, erfaßt und daraufhin die Schalteinrichtung 40 ansteuert. Die Schalteinrichtung 40 wiederum schaltet daraufhin die mit der saugnapfförmigen Einrichtung 20 verbundene Pumpe ein. Die Pumpe saugt die Luft, die in dem von der saugnapfförmigen Einrichtung 20 eingeschlossenen Raum 25 enthaltene Luft ab und sorgt somit für einen ausreichenden unterdruck bzw. Saugwirkung der saugnapfförmigen Einrichtung. Sobald das ISDN-Telefon 10 wieder deaktiviert, d. h. der Telefonhörer aufgelegt wird, veranlaßt der Mikroprozessor 60 die Schalteinrichtung 40, die Pumpe auszuschalten. Auf diese Weise ist gewährleistet, daß die Pumpe nur so lange in Betrieb ist, wie telefoniert wird.

Obwohl in der Figur lediglich eine Pumpe 30 mit einer saugnapfförmigen Einrichtung 20 verbunden ist, ist es denkbar, mehrere saugnapfförmige Einrichtungen mit der Pumpe 30 zu verbinden. Alternativ ist es natürlich auch denkbar, jeder saugnapftörmigen Einrichtung 20 eine separate Pumpe 30 zuzuordnen. Die Pumpe wird über eine Energieversorgungseinrichtung des Tischgeräts oder über eine separate Energieversorgungseinrichtung gespeist.

### Bezugszeichenliste:

- 10: elektrisches, manuell betätigbares Tischgerät; Telefon
- 15: Telefongehäuse
- 20: saugnapfförmige Einrichtung
- 25: eingeschlossener Raum
- 30: Saugpumpe
- 40: Schalteinrichtung; Relais
- 50: Saugleitung
- 60: Fuß
- 70: Telefonhörer
- 80: Mikroprozessor

## Patentansprüche

1. Elektrisches, manuell betätigbares Tischgerät, insbesondere ein drahtgebundenes Telefon (10), mit wenigstens einer Einrichtung (20) zur Sicherung des elektrischen, manuell betätigbaren Tischgeräts gegen Verschieben,
dadurch gekennzeichnet, daß
die Einrichtung (20) saugnapfförmig ausgebildet ist, daß wenigstens eine dem elektrischen Tischgerät (10) zugeordnete Pumpe (30) mit der saugnapfförmigen Einrichtung (20) verbunden ist, und daß
eine Schalteinrichtung (40) zum Ein- und Ausschalten der Pumpe (30) vorgesehen ist.

2. Elektrisches, manuell betätigbares Tischgerät nach Anspruch 1,
dadurch gekennzeichnet, daß
die Schalteinrichtung (40) die Pumpe (30) beim Aktivieren des elektrischen, manuell betätigbaren Tischgeräts (10) einschaltet und beim Deaktivieren wieder ausschaltet.

3. Elektrisches, manuell betätigbares Tischgerät nach Anspruch 1 oder 2,
dadurch gekennzeichnet, daß
die saugnapfförmige Einrichtung (20) an der zum elektrischen, manuell betätigbaren Tischgerät weisenden Seite eine Bohrung zur Aufnahme des einen Endes einer Saugleitung (50) aufweist.

4. Elektrisches, manuell betätigbares Tischgerät nach einem der Ansprüche 1 bis 3,
dadurch gekennzeichnet, daß
jeder Fuß (60) des elektrischen, manuell betätigbaren Tischgeräts (10) eine saugnapfförmige Einrichtung (20) umfaßt.

5. Elektrisches, manuell betätigbares Tischgerät nach einem der Ansprüche 1 bis 4,
dadurch gekennzeichnet, daß
das elektrische, manuell betätigbare Tischgerät (10) ein drahtgebundenes Telefon und die Schalteinrichtung (40) ein Relais ist, das beim Abheben des Telefonhörers (70) des Telefons die Pumpe (30) einschaltet und beim Auflegen des Telefonhörers (70) die Pumpe (30) wieder ausschaltet.

6. Elektrisches, manuell betätigbares Tischgerät nach einem der Ansprüche 1 bis 5,
gekennzeichnet durch eine Energieversorgungseinrichtung zur Speisung der Pumpe (30).

7. Elektrisches, manuell betätigbares Tischgerät,
dadurch gekennzeichnet, daß
die Pumpe (30) integraler Bestandteil des Tischgerätes (10) ist.
